# EUROPÄISCHE PATENTANMELDUNG

(11) **EP 0 984 191 A1**
(43) Veröffentlichungstag der Anmeldung: **08.03.2000**
(21) Anmeldenummer: 99116539.0
(22) Anmeldetag: 24.08.1999
(51) Int. Cl.: F16F 9/43, B60G 17/052, G01B 17/00

(54) **Luftfeder mit Ultraschall-Höhenmesseinrichtung**

(30) Priorität: 29.08.1998 DE 19839483
(71) Anmelder: ContiTech Luftfedersysteme GmbH, 30165 Hannover (DE)
(72) Erfinder: Fischer, Norbert, 31319 Sehnde (DE); Altsinger, Roland, Dr., 31303 Burgdorf (DE)

(57) **Zusammenfassung**

Ein in eine Luftfeder (2) zur Höhenmessung eingebauter Ultraschallsensor kann gestört werden, wenn beim Befüllen bzw. Entlüften hochfrequente Schallschwingungen auftreten.

Zur Unterdrückung solcher Störfrequenzen weist die zwischen Luftfeder (2) und Druckmittelquelle befindliche Luftversorgungsleitung (8) ein Luftanschlußrohr (10) auf, das an seiner Innenwandung mit einem netzförmigen Belag (16) - vorzugsweise einem Kunststoffnetz - ausgekleidet ist.
Die Fäden (18) des netzförmigen Belags (16) sind - bezogen auf die Mittelachse (28) des Anschlußrohres (10) - leicht geneigt ausgerichtet.

## Beschreibung

Die Erfindung betrifft eine Luftfeder mit Ultraschall-Höhenmeßeinrichtung, gemäß dem Oberbegriff des Anspruchs 1.

Luftfedern sind als tragende Teile im Fahrzeug zwischen Achse und Aufbau angeordnet. Da sich der Abstand zwischen Aufbau und Achse auch bei unterschiedlichen Beladungszuständen nicht ändern soll, ist es erforderlich, die Luftfederhöhe zu messen und bei Abweichungen das System durch Aufpumpen bzw. Ablassen von Luft nachzuregeln.

Ultraschallmeßverfahren gelangen in den verschiedensten Gebieten zur Anwendung. Luftultraschall-Abstandsmessung wird z. B. bei der Füllstandsmessung von Behältern, zur Vermessung von Wohnräumen, zur Abstandsmessung beim Einparken mit dem Kraftfahrzeug, zur Entfernungsmessung bei Autofokus-Fotoapparaten usw. eingesetzt.

Auch zur Bestimmung der jeweiligen Federhöhe sind verschiedene Luftultraschall-Abstands- bzw. Höhenmeßeinrichtungen vorgeschlagen worden.

In der Offenlegungsschrift DE 36 20 957 A1 wird für den Fahrzeugeinsatz ein Ultraschallsensor innerhalb einer Luftfeder beschrieben. Im US-Patent 4,798,369 wird ein auf Ultraschallsensoren als Geber für die Federhöhe basierendes Luftfederregelungssystem dargelegt. Die Vorteile bei der Verwendung von Ultraschall innerhalb von Luftfedern liegen darin, daß keine Verwirbelung der Schallwellen durch den Fahrtwind möglich ist und daß durch den in der Luftfeder herrschenden überdruck eine sehr gute Reichweite der Ultraschallwellen auch bei höheren Frequenzen möglich ist.

Ein in eine Luftfeder eingebauter Ultraschallsensor zur Höhenmessung kann gestört werden, wenn beim Befüllen bzw. Entlüften der Luftfeder hochfrequente Schallschwingungen auftreten. Sie werden dadurch verursacht, daß beim öffnen der Ventile eine Druckwelle in die Luftfeder hineinläuft und es an den Anschlußteilen zu Strömungsgeräuschen kommt, deren Frequenzen bis in den Ultraschallbereich hineinreichen.
Eine Möglichkeit, diese Störungen zu verringern besteht darin, die Strömungsgeschwindigkeit zu verringern, z. B. durch Verkleinern der Luftleitungequerschnitte. Diese Möglichkeit hat Jedoch den Nachteil, daß Hub- und Senkvorgänge nur sehr langsam vonstatten gehen.

Die Aufgabe der Erfindung besteht darin, einen Luftanschluß für eine mit Ultraschallmeßeinrichtung ausgestattete Luftfeder zu schaffen, bei dem die Entstehung von störenden Ultraschallschwingungen beim Befüllen und Entleeren vermieden wird.

Die in Anspruch 1 im wesentlichen aufgezeigte Lösung dieser Aufgabe manifestiert sich in einer Vorrichtung, die in einem Lufteinlaßstutzen der Luftfeder eine Drallströmung erzeugt, wodurch die Geschwindigkeit im Randbereich der Luftstömung verringert wird. Auf diese Weise wird die Erzeugung von störenden Ultraschallschwingungen an den Abrißkanten verringert, ohne dabei den Luftdurchfluß nennenswert zu verschlechtern.

Das erfindungsgemäß hergerichtete Luftanschlußrohr ist an seiner Innenwandung vorzugsweise mit einem Kunststoffnetz ausgekleidet, dessen Fäden eine - bezogen auf die Mittelachse des Rohres - geringe Neigung aufweisen. Dadurch wird die Geschwindigkeit des Luftstroms im Randbereich verringert und die Entstehung von Ultraschallstörungen vermindert.
Wenn der Durchmesser des Luftanschlußrohres größer ist als der des Luftschlauchs, vermindert sich die Strömungsgeschwindigkeit bereits beim übergang vom Schlauch auf das Luftanschlußrohr. Damit die Fäden des Kunststoffnetzes der starken Luftströmung einen zuverlässigen Widerstand entgegensetzen können, sind die Fäden an ihren Kreuzungepunkten miteinander verschmolzen. Ein Herausrutschen des Kunststoffnetzes aus dem Luftanschlußrohr wird durch eine Haltenase am luftfederseitigen Ende des Luftanschlußrohres verhindert.

Durch ein hornförmig aufgeweitetes Mundstück (Endstück) des Luftanschlußrohres kann eine zwischen Rohr und Luftfederinnenraum eventuell auftretende akustische Fehlanpassung zuverlässig vermieden werden.

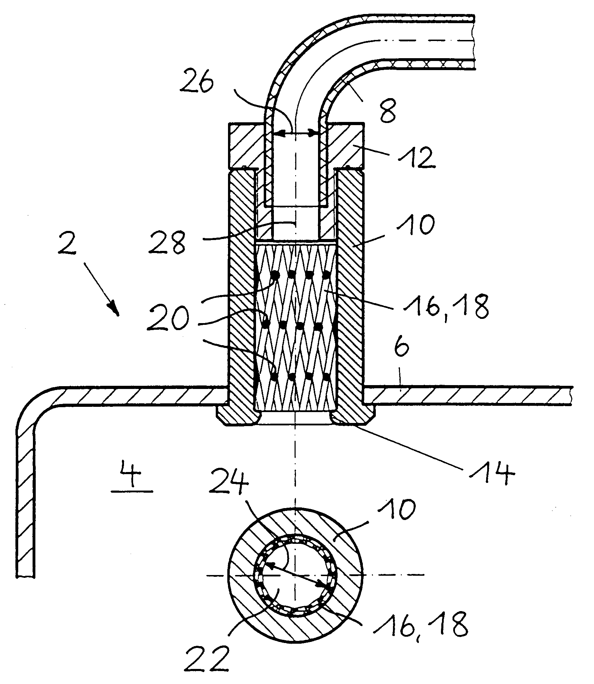

Anhand der beigefügten Abbildung wird ein Ausführungsbeispiel des Erfindungsgegenstands beschrieben. Die Abbildung zeigt ausschnittsweise im Querschnitt das Oberteil einer Luftfeder mit einem Stuzen für Luftein- und Auslaß.

Der nach oben mittels einer Bördelplatte 6 abgeschlossene Innenraum 4 der Luftfeder 2 ist mittels einer als Schlauch 8 ausgebildeten Druckluftleitung mit einer (nicht dargestellten) Druckmittelquelle verbunden. Zur Befestigung des Schlauchs 8 an die Luftfeder 2 befindet sich zwischen Schlauchende und Bördelplatte 6 ein Luftanschlußrohr 10 an dem der Schlauch 8 mit einem Schlauchverbindungsstück 12 befestigt ist. Zur Befestigung des Luftanschlußrohres 10 an der Bördelplatte 6 ist eine Haltenase 14 vorgesehen, die ein Herausrutschen des Luftanschlußrohres 10 aus der Bördelplatte 6 verhindert.

Die Innenwand des Luftanschlußrohres 10 ist mit einem Kunststoffnetz 16 ausgelegt. Die Fäden 18 des Kunststoffnetzes 16 sind an ihren Kreuzungspunkten 20 miteinander verschmolzen. Wie aus dem Schnitt ersichtlich, bleibt der Kern 22 des Luftanschlußrohres 10 frei. Sein freier Durchmesser 24 ist mindestens so groß wie die lichte Weite 26 des Schlauchs 8.

Die an der Innenoberfläche liegenden Fäden 18 des Netzes 16 verlaufen in einem steilen Winkel, d. h. sie weisen einen geringen Winkel bezogen auf die Rohrlängsachse 28 auf. Das Netz 16 wird durch die auch nach innen gerichtete Haltenase 14, die sich am luftfederseitigen Rand des Luftanschlußrohres 10 befinden, gegen ein Herausfallen und Wegblasen gesichert. Die lichte Weite der nach innen gerichteten Haltenase 14 ist größer als der freie Durchmesser 24 des Luftanschlußrohres 10. Diese Haltenase 14 ist zum Luftfederinnenraum 4 hin abgerundet.

Durch die geneigten Fäden 18 des Netzes 16 ergibt sich eine Drallbewegung des Luftstrome. Gleichzeitig wird die in Wandnähe strömende Luft gebremst. Dadurch ist an der der Luftfeder 2 zugewandten Kante des Luftanschlußrohres 10 die Strömungsgeschwindigkeit verringert, so daß dort nur geringe Ultraschallgeräusche beim Strömungsabriß auftreten können.

### Bezugszeichenliste

- 2: Luftfeder
- 4: Luftfederinnenraum
- 6: Bördelplatte
- 8: Schlauch, Druckluftleitung, Luftversorgungsleitung
- 10: Luftanschlußrohr
- 12: Schlauchverbindungsstück
- 14: Haltenase
- 16: (Kunststoff)netz, netzförmiger Belag
- 18: Fäden
- 20: Kreuzungspunkt (e)
- 22: Kern des Luftanschlußrohres
- 24: freier Durchmesser des Luftanschlußrohres
- 26: lichte Weite des Schlauches
- 28: Rohrlängsachse, Mittelachse

## Patentansprüche

1. Luftfeder (2) mit Ultraschall-Höhenmeßeinrichtung, wobei der Luftfederinnenraum (4) über eine Luftversorgungsleitung (8) mit einer Druckmittelquelle verbindbar ist,
**dadurch gekennzeichnet,**
daß die zwischen Luftfeder (2) und Druckmittelquelle befindliche Luftversorgungsleitung (8) ein Luftanschlußrohr (10) aufweist,
das an seiner Innenwandung mit einem netzförmigen Belag (16) ausgekleidet ist.

2. Luftfeder nach Anspruch 1,
**dadurch gekennzeichnet,**
daß der Belag (16) zur Auskleidung der Innenwand des Luftanschlußrohres (10) ein Kunststoffnetz ist.

3. Luftfeder nach Anspruch 1 oder 2,
**dadurch gekennzeichnet,**
daß die Richtung der Fäden (18) des netzförmigen Belags (16) bezogen auf die Mittelachse (28) des Anschlußrohres (10) einen kleinen Neigungswinkel aufzeigt.

4. Luftfeder nach Anspruch 2 oder 3,
**dadurch gekennzeichnet,**
daß die Fäden (18) in ihren Kreuzungspunkten (20) miteinander verschmolzen sind.

5. Luftfeder nach einem der vorhergehenden Ansprüche,
**dadurch gekennzeichnet,**
daß der Innendurchmesser (24) des netzförmigen Belags (16) mindestens so groß ist wie die lichte Weite (26) des als Luftversorgungsleitung dienenden Luftschlauchs (8).

6. Luftfeder nach einem der Ansprüche 1 bis 5,
**dadurch gekennzeichnet,**
daß das Netz (16) durch eine am Ende des Luftanschlußrohres (10) befindliche Haltenase (14) gegen Herausfallen und Wegblasen gesichert ist.

7. Luftfeder nach Anspruch 6,
**dadurch gekennzeichnet,**
daß die Haltenase (14) zum Luftinnenraum (4) hin abgerundet ist.

8. Luftfeder nach einem der Ansprüche 1 bis 7,
**gekennzeichnet durch**
ein zum Luftfederinnenraum (4) hin hornförmig aufgeweitetes Mundstück (Endstück) des Luftanschlußrohres (10).
